# FASCICULE DE BREVET EUROPEEN

(11) **EP 1 977 055 B1**
(45) Date de publication et mention de la délivrance du brevet: **29.07.2009**
(21) Numéro de dépôt: 07725903.4
(22) Date de dépôt: 07.06.2007
(51) Int. Cl.: E04D 12/00, B32B 15/14

(54) **ECRAN DE SOUS-TOITURE**
DACHUNTERLAGENSCHIRM
ROOFING UNDERLAY SCREEN

(30) Priorité: 08.06.2006 FR 0605107
(43) Date de publication de la demande: 08.10.2008
(73) Titulaire: Loda S.A.R.L., 35000 Rennes (FR)
(72) Inventeur: GRALL, Patrick, 3500 Rennes (FR)
(74) Mandataire: Maillet, Alain
(86) Numéro de dépôt international: PCT/EP2007/005057
(87) Numéro de publication internationale: WO 2007/141027

(56) Documents cités:
- EP-A2- 1 400 348
- DE-U1-3202004 007 54
- US-B1- 6 308 482

## Description

La présente invention concerne un écran de sous-toiture ainsi qu'un procédé de fabrication d'un tel écran de sous-toiture.

On connaît un écran de sous-toiture qui comporte une couche d'isolant thermique synthétique imprégnée de bitume. La rigidité d'un tel écran de sous-toiture permet de le fixer sur des chevrons espacés de 90 cm. Cependant un tel écran de sous-toiture n'est pas facile à réaliser et à mettre en oeuvre.

De plus US-B1-6 308 482 montre un écran de sous-toiture 10 (voir fig. 3) comprenant une première couche 32 en matériau métallique, une deuxième couche 12 en matériau tissé et une troisième couche 14 en matériau isolant et directement fixée à la deuxième couche 12. Toutes les couches sont pourvues de micro-perforations.

Un objet de la présente invention est de proposer un écran de sous-toiture qui ne présente pas les inconvénients de l'art antérieur.

A cet effet, est proposé un écran de sous toiture comprenant :
- une première couche réalisée en un premier matériau métallique ou métallisé formant une barrière de réflexion thermique;
- une deuxième couche réalisée en un deuxième matériau tissé et collée à la première couche;
- une troisième couche réalisée en un troisième matériau isolant et collée à la deuxième couche ; et
- une quatrième couche réalisée en un quatrième matériau métallique ou métallisé formant une barrière de réflexion thermique et collée à la troisième couche ;
la première couche et la deuxième couche étant pourvues de micro-perforations assurant la perméance à la vapeur d'eau et l'imperméabilité à l'eau et la quatrième couche étant pourvue de perforations assurant la perméance à la vapeur d'eau.

Avantageusement, le collage des différentes couches entre elles est réalisé par thermocollage.

Avantageusement, le diamètre des micro-perforations est inférieur ou égal à 20µm.

Avantageusement, le premier matériau et le quatrième matériau sont de l'aluminium ou un matériau aluminisé.

Avantageusement, le deuxième matériau tissé est de la fibre de verre tissée.

Avantageusement, le troisième matériau isolant est de la fibre de verre non tissée.

L'invention propose également un procédé de fabrication d'un écran de sous-toiture selon une des variantes précédentes, comprenant :
- une étape de fourniture d'une première couche réalisée en un premier matériau métallique ou métallisé formant une barrière de réflexion thermique;
- une étape de fourniture d'une deuxième couche réalisée en un deuxième matériau tissé ;
- une étape de collage de la deuxième couche à la première couche;
- une étape de fourniture d'une troisième couche réalisée en un troisième matériau isolant ;
- une étape de collage de la troisième couche à la deuxième couche ainsi collée ;
- une étape de fourniture d'une quatrième couche réalisée en un quatrième matériau métallique ou métallisé formant une barrière de réflexion thermique;
- une étape de collage de la quatrième couche à la troisième couche ainsi collée ;
- une étape de réalisation, dans la première couche et la deuxième couche, de micro-perforations assurant la perméance à la vapeur d'eau et l'imperméabilité à l'eau ; et
- une étape de réalisation, dans la quatrième couche, de perforations assurant la perméance à la vapeur d'eau.

Selon un mode de réalisation particulier, l'écran de sous-toiture comprend une cinquième couche réalisée en un cinquième matériau respirant, ladite cinquième couche étant collée entre la deuxième couche et la troisième couche.

Avantageusement, le cinquième matériau respirant est du type polyéthylène, polyuréthane ou polypropylène, ou un mélange de ces produits avec du carbonate de calcium.

L'invention propose également un procédé de fabrication d'un écran de sous-toiture selon le mode de réalisation particulier précédent qui comprend :
- une étape de fourniture d'une première couche réalisée en un premier matériau métallique ou métallisé formant une barrière de réflexion thermique;
- une étape de fourniture d'une deuxième couche réalisée en un deuxième matériau tissé ;
- une étape de collage de la deuxième couche à la première couche;
- une étape de fourniture d'une cinquième couche réalisée en un cinquième matériau respirant ;
- une étape de collage de la cinquième couche à la deuxième couche ainsi collée;
- une étape de fourniture d'une troisième couche réalisée en un troisième matériau isolant ;
- une étape de collage de la troisième couche à la cinquième couche ainsi collée;
- une étape de fourniture d'une quatrième couche réalisée en un quatrième matériau métallique ou métallisé formant une barrière de réflexion thermique;
- une étape de collage de la quatrième couche à la troisième couche ainsi collée ;
- une étape de réalisation, dans la première couche et la deuxième couche, de micro-perforations assurant la perméance à la vapeur d'eau et l'imperméabilité à l'eau ; et
- une étape de réalisation, dans la quatrième couche, de perforations assurant la perméance à la vapeur d'eau.

Selon un mode de réalisation particulier, l'écran de sous-toiture comprend une sixième couche réalisée en un sixième matériau constitué d'une trame tissé et collée à la quatrième couche et disposée entre la troisième couche et la quatrième couche.

Avantageusement, la sixième couche est pourvues de perforations alignées avec les perforations de la quatrième couche.

Avantageusement le sixième matériau est constitué d'une trame en fibre de verre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en coupe d'un écran de sous-toiture selon l'invention;
la Fig. 2 représente un dispositif de fabrication d'un écran de sous-toiture selon l'invention; et
la Fig. 3 représente une vue en coupe d'un écran de sous-toiture selon un autre mode de réalisation de l'invention.

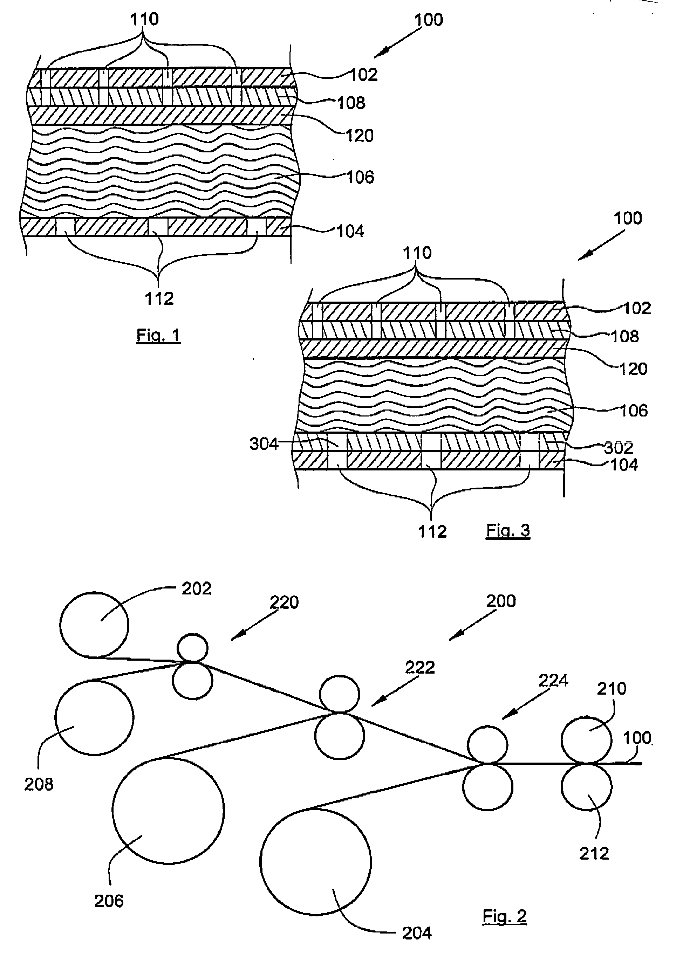

La Fig. 1 représente un écran de sous toiture 100 comprenant :
- une première couche 102 réalisée en un premier matériau formant une barrière de réflexion thermique, par exemple, du type matériau métallique ou matériau aluminisé;
- une deuxième couche 108 réalisée en un deuxième matériau tissé et qui est collée à la première couche 102 ;
- une troisième couche 106 réalisée en un troisième matériau isolant et qui est collée à la deuxième couche 108 ; et
- une quatrième couche 104 réalisée en un quatrième matériau formant une barrière de réflexion thermique, par exemple, du type matériau métallique ou matériau aluminisé, et qui est collée à la troisième couche 106.

La première couche 102 et la deuxième couche 108 sont pourvues de micro-perforations 110 assurant la perméance à la vapeur d'eau et l'imperméabilité à l'eau et la quatrième couche 104 est pourvue de perforations 112 assurant la perméance à la vapeur d'eau.

Lors de la mise en place de l'écran de sous-toiture 100 sous une toiture d'un bâtiment, la première couche 102 est orientée vers la toiture, c'est-à-dire vers l'extérieur du bâtiment, tandis que la quatrième couche 104 est orientée vers l'intérieur du bâtiment.

La première couche 102 sert de barrière thermique réfléchissante à la chaleur extérieure voulant pénétrer dans le bâtiment. La première couche 102 peut être métallique comme par exemple en aluminium, ou métallisée, comme par exemple en matériau aluminisé.

La quatrième couche 104 sert de barrière thermique réfléchissante à la chaleur intérieure voulant sortir du bâtiment. La quatrième couche 104 peut être en métallique comme par exemple aluminium, ou métallisée, comme par exemple en matériau aluminisé.

La deuxième couche 108 est un matériau qui, du fait de son tissage, présente une forte résistance au déchirement et qui permet ainsi de rendre plus résistant l'écran de sous-toiture 100. La structure plus résistante de l'écran de sous-toiture 100 autorise, alors, sa mise en place sur des chevrons écartés de 90 cm. Selon un mode de réalisation particulier, la deuxième couche 108 est en fibres de verre tissées et le diamètre des fibres de verre est d'environ 8 µm à 18 µm.

La troisième couche 106 sert, entre autres, d'isolant thermique entre la première couche 102 et la quatrième couche 104 et évite ainsi la création de pont thermique. Selon un mode de réalisation particulier, la troisième couche 106 est un matelas en fibres de verre non tissées.

La vapeur d'eau qui se forme à l'arrière de la première couche 102, c'est-à-dire vers l'intérieur du bâtiment, doit être évacuée vers l'avant de la première couche 102, c'est-à-dire vers extérieur du bâtiment. A cet effet, la première couche 102 et la deuxième couche 108 sont pourvues de micro-perforations 110. Les micro-perforations 110 sont dimensionnées de manière à ce que la vapeur d'eau puisse les traverser sans que l'eau de ruissellement puisse y pénétrer. En effet, la vapeur d'eau qui se trouve vers l'extérieur de la première couche 102 se condense sous l'effet de la température extérieure et vient ruisseler sur la première couche 102 sans y pénétrer. La première couche 102 forme ainsi une barrière imperméable à l'eau mais perméante à la vapeur d'eau.

Selon un mode de réalisation particulier, les micro-perforations 110 ont un diamètre de l'ordre de 20 µm mais peuvent varier de 10 µm à 60 µm.

Pour permettre l'évacuation de la vapeur d'eau qui se forme à l'intérieur du bâtiment, la quatrième couche 104 est pourvue de perforations 112. Les perforations 112 permettent le passage de la vapeur d'eau. Les perforations 112 peuvent avoir un diamètre supérieur ou égal à celui des micro-perforations 110 car elles ne jouent aucun rôle dans l'imperméabilité de écran de sous-toiture 100 par rapport à l'eau provenant de l'extérieur de la première couche 102.

Selon un mode de réalisation particulier, les perforations 112 ont un diamètre de l'ordre de 50 µm à 150 µm.

Afin de renforcer encore l'étanchéité et la perméance de l'écran sous-toiture 100, celui-ci comprend une cinquième couche 120 réalisée en un cinquième matériau respirant et étanche. La cinquième couche 120 est collée entre la deuxième couche 108 et la troisième couche 106. Le cinquième matériau respirant peut être du type polyéthylène, polyuréthane ou polypropylène ou un mélange de ces produits avec du carbonate de calcium. Selon un mode de réalisation particulier, l'épaisseur de la cinquième couche 120 est comprise entre 20µm et 50µm. Cette cinquième couche 120 peut être réalisée par étirage afin de réaliser un réseau de micro-canaux laissant passer la vapeur d'eau.

Le collage des différentes couches 102, 108, 106, 104, 120 entre elles peut être réalisé par thermocollage. Par exemple, du polyéthylène peut être utilisé pour constituer la colle entre les différentes couches 102, 108, 106, 104.

L'écran de sous-toiture 100 décrit ci-dessus est d'une manipulation simple et permet de réaliser une barrière d'isolation thermique ainsi qu'une barrière perméante dont la structure est renforcée par la présence du deuxième matériau tissé.

La Fig. 2 représente un dispositif de fabrication 200 d'un écran de sous-toiture 100 selon un des modes de réalisation décrits ci-dessus.

Le dispositif de fabrication 200 comprend un premier dispositif de collage 220, un deuxième dispositif de collage 222, un troisième dispositif de collage 224 et un dispositif de perforation.

Dans le mode de réalisation de l'invention représenté ici, chaque dispositif de collage 220, 222, 224 prend la forme d'une paire de rouleaux dont l'un ou les deux peuvent être montés en température, qui sont mis en pression l'un contre l'autre et entre lesquels passent les éléments à coller.

Le premier matériau formant une barrière de réflexion thermique, par exemple métallique, est stocké sous forme d'un premier rouleau 202, le deuxième matériau tissé est stocké sous forme d'un deuxième rouleau 208, le troisième matériau isolant est stocké sous forme d'un troisième rouleau 206 et le quatrième matériau formant une barrière de réflexion thermique, par exemple métallique est stocké sous forme d'un quatrième rouleau 204.

Le dispositif de perforation prend ici la forme d'un premier rouleau de perforation 210 prévu pour réaliser les micro-perforations 110 et d'un deuxième rouleau de perforation 212 prévu pour réaliser les perforations 112. A cette fin, le premier rouleau de perforation 210 et le deuxième rouleau de perforation 212 peuvent être munis de pointes qui font saillie par rapport à la surface des rouleaux de perforation 210 et 212 et qui viennent perforer la première couche 102 et la deuxième couche 108, d'une part, et la quatrième couche 104, d'autre part.

Dans le cas de l'écran de sous-toiture 100 avec une cinquième couche, le dispositif de fabrication comprend un cinquième rouleau et un quatrième dispositif de collage, l'ensemble étant disposé en aval du premier dispositif de collage 220 et en amont du deuxième dispositif de collage 222.

Le procédé de fabrication de l'écran de sous toiture 100 mis en oeuvre dans le dispositif de fabrication 200 comprend :
- une étape de fourniture de la première couche 102 réalisée en un premier matériau formant une barrière de réflexion thermique, par exemple métallique, à l'aide du premier rouleau 202 ;
- une étape de fourniture de la deuxième couche 108 réalisée en un deuxième matériau tissé à l'aide du deuxième rouleau 208 ;
- une étape de collage de la deuxième couche 108 à la première couche 102 à l'aide du premier dispositif de collage 220 ;
- une étape de fourniture d'une troisième couche 106 réalisée en un troisième matériau isolant à l'aide du troisième rouleau 206 ;
- une étape de collage de la troisième couche 106 à la deuxième couche 108 ainsi collée à l'aide du deuxième dispositif de collage 222 ;
- une étape de fourniture d'une quatrième couche 104 réalisée en un quatrième matériau formant une barrière de réflexion thermique, par exemple métallique, à l'aide du quatrième rouleau 204 ;
- une étape de collage de la quatrième couche 104 à la troisième couche 106 ainsi collée à l'aide du troisième dispositif de collage 224;
- une étape de réalisation, dans la première couche 102 et la deuxième couche 108, de micro-perforations 110 assurant la perméance à la vapeur d'eau et l'imperméabilité à l'eau à l'aide du premier rouleau de perforation 210 ; et
- une étape de réalisation, dans la quatrième couche 104, de perforations 112 assurant la perméance à la vapeur d'eau à l'aide du deuxième rouleau de perforation 212.

Dans le cas de l'écran de sous-toiture 100 comprenant la cinquième couche 120, le procédé de fabrication comprend :
- une étape de fourniture d'une première couche 102 réalisée en un premier matériau formant une barrière de réflexion thermique, par exemple métallique ;
- une étape de fourniture d'une deuxième couche 108 réalisée en un deuxième matériau tissé ;
- une étape de collage de la deuxième couche 108 à la première couche 102 ;
- une étape de fourniture d'une cinquième couche 120 réalisée en un cinquième matériau respirant ;
- une étape de collage de la cinquième couche 120 à la deuxième couche 108 ainsi collée ;
- une étape de fourniture d'une troisième couche 106 réalisée en un troisième matériau isolant ;
- une étape de collage de la troisième couche 106 à la cinquième couche 120 ainsi collée ;
- une étape de fourniture d'une quatrième couche 104 réalisée en un quatrième matériau formant une barrière de réflexion thermique, par exemple métallique ;
- une étape de collage de la quatrième couche 104 à la troisième couche 106 ainsi collée ;
- une étape de réalisation, dans la premier couche 102 et la deuxième couche 108, de micro-perforations 110 assurant la perméance à la vapeur d'eau et l'imperméabilité à l'eau ; et
- une étape de réalisation, dans la quatrième couche 104, de perforations 112 assurant la perméance à la vapeur d'eau.

La Fig. 3 représente un autre mode de réalisation, dans lequel l'écran de sous-toiture 100 comprend une sixième couche 302 réalisée en un sixième matériau constitué d'une trame tissé et collée à la quatrième couche 104 et disposée entre la troisième couche 106 et la quatrième couche 104. Du fait de son tramage, la sixième couche 302 présente une forte résistance au déchirement et permet ainsi de rendre plus résistant l'écran de sous-toiture 100. Afin d'assurer la perméance à la vapeur d'eau, la sixième couche 302 est pourvues de perforations 304 alignées avec les perforations 112 de la quatrième couche 104. Selon un mode de réalisation particulier, le sixième matériau est constitué d'une trame en fibre de verre.

Le procédé de fabrication de l'écran de sous-toiture 100 comprend alors, avant ou après l'étape de fourniture de la quatrième couche 104, une étape de fourniture de la sixième couche 302 et une étape de collage de la sixième couche 302 à la quatrième couche 104. L'étape de collage de la quatrième couche 104 à la troisième couche 106 est alors remplacée par une étape de collage de la sixième couche 302 à la troisième couche 106.

L'utilisation d'un premier matériau métallique, d'un quatrième matériau métallique, d'un deuxième matériau en fibre de verre et d'un troisième matériau en fibre de verre permet d'obtenir un écran de sous-toiture 100 hautement incombustible.

La mise en place du cinquième matériau en polyéthylène réduit ce pouvoir d'incombustibilité mais la proportion de cinquième matériau restant faible, la capacité d'incombustibilité de l'écran de sous-toiture 100 reste nettement supérieure à celles des écrans de sous-toiture de l'état de la technique.

Bien entendu, la présente invention n'est pas limitée aux exemples et modes de réalisation décrits et représentés, mais elle est susceptible de nombreuses variantes accessibles à l'homme de l'art dans l'étendue de la protection déterminée par le jeu de revendications.

## Revendications

1. Ecran de sous-toiture (100) comprenant:
- une première couche (102) réalisée en un premier matériau métallique ou métallisé formant une barrière de réflexion thermique;
- une deuxième couche (108) réalisée en un deuxième matériau tissé et collée à la première couche (102) ;
- une troisième couche (106) réalisée en un troisième matériau isolant et collée à la deuxième couche (108) ; et
- une quatrième couche (104) réalisée en un quatrième matériau métallique ou métallisé formant une barrière de réflexion thermique et collée à la troisième couche (106) ;
la premier couche (102) et la deuxième couche (108) étant pourvues de micro-perforations (110) assurant la perméance à la vapeur d'eau et l'imperméabilité à l'eau et la quatrième couche (104) étant pourvue de perforations (112) assurant la perméance à la vapeur d'eau.

2. Ecran de sous-toiture (100) selon la revendication 1, **caractérisé en ce que** le collage des différentes couches (102, 108, 106, 104, 120) entre elles est réalisé par thermocollage.

3. Ecran de sous-toiture (100) selon une des revendications 1 ou 2, **caractérisé en ce que** le diamètre des micro-perforations (110) est inférieur ou égal à 20µm.

4. Ecran de sous-toiture (100) selon une des revendications 1 à 3, **caractérisé en ce que** le premier matériau et le quatrième matériau sont de l'aluminium ou un matériau aluminisé.

5. Ecran de sous-toiture (100) selon une des revendications 1 à 4, **caractérisé en ce que** le deuxième matériau tissé est de la fibre de verre tissée.

6. Ecran de sous-toiture (100) selon une des revendications 1 à 5, **caractérisé en ce que** le troisième matériau isolant est de la fibre de verre non tissée.

7. Ecran de sous-toiture (100) selon une des revendications 1 à 6, **caractérisé en ce qu'**il comprend une cinquième couche (120) réalisée en un cinquième matériau respirant, ladite cinquième couche (120) étant collée entre la deuxième couche (108) et la troisième couche (106).

8. Ecran de sous-toiture (100) selon la revendication 7, **caractérisé en ce que** le cinquième matériau respirant est du type polyéthylène, polyuréthane ou polypropylène, ou un mélange de ces produits avec du carbonate de calcium.

9. Ecran de sous-toiture (100) selon une des revendications 1 à 8, **caractérisé en ce qu'**il comprend une sixième couche (302) réalisée en un sixième matériau constitué d'une trame tissé et collée à la quatrième couche (104) et disposée entre la troisième couche (106) et la quatrième couche (104).

10. Ecran de sous-toiture (100) selon la revendication 9, **caractérisé en ce que** la sixième couche (302) est pourvues de perforations (304) alignées avec les perforations (112) de la quatrième couche (104).

11. Ecran de sous-toiture (100) selon une des revendications 8 ou 9, **caractérisé en ce que** le sixième matériau est constitué d'une trame en fibre de verre.

12. Procédé de fabrication d'un écran de sous-toiture (100) selon une des revendications 1 à 6, **caractérisé en ce qu'**il comprend :
- une étape de fourniture d'une première couche (102) réalisée en un premier matériau métallique ou métallisé formant une barrière de réflexion thermique;
- une étape de fourniture d'une deuxième couche (108) réalisée en un deuxième matériau tissé ;
- une étape de collage de la deuxième couche (108) à la première couche (102) ;
- une étape de fourniture d'une troisième couche (106) réalisée en un troisième matériau isolant ;
- une étape de collage de la troisième couche (106) à la deuxième couche (108) ainsi collée ;
- une étape de fourniture d'une quatrième couche (104) réalisée en un quatrième matériau métallique ou métallisé formant une barrière de réflexion thermique;
- une étape de collage de la quatrième couche (104) à la troisième couche (106) ainsi collée ;
- une étape de réalisation, dans la première couche (102) est la deuxième couche (108), de micro-perforations (110) assurant la perméance à la vapeur d'eau et l'imperméabilité à l'eau ; et
- une étape de réalisation, dans la quatrième couche (104), de perforations (112) assurant la perméance à la vapeur d'eau.

13. Procédé de fabrication d'un écran de sous-toiture (100) selon une des revendications 7 ou 8, **caractérisé en ce qu'**il comprend :
- une étape de fourniture d'une première couche (102) réalisée en un premier matériau métallique ou métallisé formant une barrière de réflexion thermique;
- une étape de fourniture d'une deuxième couche (108) réalisée en un deuxième matériau tissé ;
- une étape de collage de la deuxième couche (108) à la première couche (102) ;
- une étape de fourniture d'une cinquième couche (120) réalisée en un cinquième matériau respirant ;
- une étape de collage de la cinquième couche (120) à la deuxième couche (108) ainsi collée ;
- une étape de fourniture d'une troisième couche (106) réalisée en un troisième matériau isolant ;
- une étape de collage de la troisième couche (106) à la cinquième couche (120) ainsi collée ;
- une étape de fourniture d'une quatrième couche (104) réalisée en un quatrième matériau métallique ou métallisé formant une barrière de réflexion thermique;
- une étape de collage de la quatrième couche (104) à la troisième couche (106) ainsi collée ;
- une étape de réalisation, dans la premier couche (102) et la deuxième couche (108), de micro-perforations (110) assurant la perméance à la vapeur d'eau et l'imperméabilité à l'eau ; et
- une étape de réalisation, dans la quatrième couche (104), de perforations (112) assurant la perméance à la vapeur d'eau.

## Claims

1. Roofing underlay (100) which comprises:
- a first layer (102) which is made of a first, metallic or metallised, material which forms a thermally reflective barrier,
- a second layer (108) which is made of a second, woven, material and which is bonded to the first layer (102),
- a third layer (106) which is made of a third, insulating, material and which is bonded to the second layer (108), and
- a fourth layer (104) which is made of a fourth, metallic or metallised, material which forms a thermally reflective barrier, which fourth layer (104) is bonded to the third layer (106),
the first layer (102) and the second layer (108) being provided with micro-perforations (110) which ensure permeability to water vapour and impermeability to water and the fourth layer (104) being provided with perforations (112) which ensure permeability to water vapour.

2. Roofing underlay (100) according to claim 1, **characterised in that** the bonding together of the different layers (102, 108, 106, 104, 120) is performed by thermal bonding.

3. Roofing underlay (100) according to either of claims 1 and 2, **characterised in that** the diameter of the micro-perforations (110) is equal to or less than 20 µm.

4. Roofing underlay (100) according to one of claims 1 to 3, **characterised in that** the first material and the second material are aluminium or an aluminised material

5. Roofing underlay (100) according to one of claims 1 to 4, **characterised in that** the second, woven, material is woven glass fibre.

6. Roofing underlay (100) according to one of claims 1 to 5, **characterised in that** the third, insulating, material is non- woven glass fibre.

7. Roofing underlay (100) according to one of claims 1 to 6, **characterised in that** it comprises a fifth layer (120) which is made of a fifth, breathing, material, the said fifth layer (120) being bonded between the second layer (108) and the third layer (106).

8. Roofing underlay (100) according to claim 7, **characterised in that** the fifth, breathing, layer is of the polyethylene, polyurethane or polypropylene type or is a mixture of these products with calcium carbonate.

9. Roofing underlay (100) according to one of claims 1 to 8, **characterised in that** it comprises a sixth layer (302) which is made from a sixth material which is formed by an weft-woven fabric, which sixth layer (302) is bonded to the fourth layer (104) and is arranged between the third layer (106) and the fourth layer (104).

10. Roofing underlay (100) according to claim 9, **characterised in that** the sixth layer (302) is provided with perforations (304) which are aligned with the perforations (112) in the fourth layer (104).

11. Roofing underlay (100) according to either of claims 8 and 9, **characterised in that** the sixth material is formed by a glass fibre weft-woven fabric.

12. Method of manufacturing a roofing underlay (100) according to one of claims 1 to 6, **characterised in that** it comprises:
- a step of supplying a first layer (102) which is made of a first, metallic or metallised, material which forms a thermally reflective barrier,
- a step of supplying a second layer (108) which is made of a second, woven, material,
- a step of bonding the second layer (108) to the first layer (102),
- a step of supplying a third layer (106) which is made of a third, insulating, material
- a step of bonding the third layer (106) to the second layer (108) which was bonded as above,
- a step of supplying a fourth layer (104) which is made of a fourth, metallic or metallised, material which forms a thermally reflective barrier,
- a step of bonding the fourth layer (104) to the third layer (106) which was bonded as above,
- a step of making, in the first layer (102) and the second layer (108), micro-perforations (110) which ensure permeability to water vapour and impermeability to water, and
- a step of making, in the fourth layer (104), perforations (112) which ensure permeability to water vapour.

13. Method of manufacturing a roofing underlay (100) according to either of claims 7 and 8, comprising:
- a step of supplying a first layer (102) which is made of a first, metallic or metallised, material which forms a thermally reflective barrier,
- a step of supplying a second layer (108) which is made of a second, woven, material,
- a step of bonding the second layer (108) to the first layer (102),
- a step of supplying a fifth layer (120) which is made of a fifth, breathing, material,
- a step of bonding the fifth layer (120) to the second layer (108) which was bonded as above,
- a step of supplying a third layer (106) which is made of a third, insulating, material
- a step of bonding the third layer (106) to the fifth layer (120) which was bonded as above,
- a step of supplying a fourth layer (104) which is made of a fourth, metallic or metallised, material which forms a thermally reflective barrier,
- a step of bonding the fourth layer (104) to the third layer (106) which was bonded as above,
- a step of making, in the first layer (102) and the second layer (108), micro-perforations (110) which ensure permeability to water vapour and impermeability to water, and
- a step of making, in the fourth layer (104), perforations (112) which ensure permeability to water vapour.

## Patentansprüche

1. Dachunterlagenschirm (100), Folgendes aufweisend:
- eine erste Schicht (102), die aus einem ersten metallischen oder metallisierten Material hergestellt ist, das eine Wärmerückstrahlbarriere bildet;
- eine zweite Schicht (108), die aus einem zweiten gewebten und auf die erste Schicht (102) geklebten Material besteht;
- eine dritte Schicht (106), die aus einem isolierenden dritten Material hergestellt und auf die zweite Schicht (108) geklebt ist, und
- eine vierte Schicht (104), die aus einem vierten metallischen oder metallisierten Material hergestellt ist, das eine Wärmerückstrahlbarriere bildet und auf die dritte Schicht (106) geklebt ist,
wobei die erste Schicht (102) und die zweite Schicht (108) mit Mikroperforierungen (110) versehen sind, die die Durchlässigkeit für Wasserdampf und die Undurchlässigkeit für Wasser sicherstellen, und wobei die vierte Schicht (104) mit Perforierungen (112) versehen ist, die die Durchlässigkeit für Wasserdampf sicherstellen.

2. Dachunterlagenschirm (100) nach Anspruch 1, **dadurch gekennzeichnet, dass** das Kleben der verschiedenen Schichten (102, 108, 106, 104, 120) untereinander durch Warmkleben erfolgt.

3. Dachunterlagenschirm (100) nach einem der Ansprüche 1 oder 2, **dadurch gekennzeichnet, dass** der Durchmesser der Mikroperforierungen (110) kleiner oder gleich 20 µm ist.

4. Dachunterlagenschirm (100) nach einem der Ansprüche 1 bis 3, **dadurch gekennzeichnet, dass** das erste Material und das vierte Material Aluminium oder ein aluminiumbeschichtetes Material sind.

5. Dachunterlagenschirm (100) nach einem der Ansprüche 1 bis 4, **dadurch gekennzeichnet, dass** das zweite gewebte Material gewebte Glasfaser ist.

6. Dachunterlagenschirm (100) nach einem der Ansprüche 1 bis 5, **dadurch gekennzeichnet, dass** das dritte, isolierende Material Glasfaservlies ist.

7. Dachunterlagenschirm (100) nach einem der Ansprüche 1 bis 6, **dadurch gekennzeichnet, dass** er eine fünfte Schicht (120) aufweist, die aus einem atmungsfähigen fünften Material besteht, wobei die fünfte Schicht (120) zwischen die zweite Schicht (108) und die dritte Schicht (106) geklebt ist.

8. Dachunterlagenschirm (100) nach Anspruch 7, **dadurch gekennzeichnet, dass** das fünfte atmungsfähige Material vom Typ Polyethylen, Polyurethan oder Polypropylen oder ein Gemisch dieser Produkte mit einem Calciumcarbonat ist.

9. Dachunterlagenschirm (100) nach einem der Ansprüche 1 bis 8, **dadurch gekennzeichnet, dass** er eine sechste Schicht (302 aufweist, die aus einem sechsten Material hergestellt ist, das aus einem gewebten Schuss besteht und auf die vierte Schicht (104) geklebt und zwischen der dritten Schicht (106) und der vierten Schicht (104) angeordnet ist.

10. Dachunterlagenschirm (100) nach Anspruch 9, **dadurch gekennzeichnet, dass** die sechste Schicht (302) mit Perforierungen (304) versehen ist, die mit den Perforierungen (112) der vierten Schicht (104) ausgerichtet sind.

11. Dachunterlagenschirm (100) nach einem der Ansprüche 8 oder 9, **dadurch gekennzeichnet, dass** das sechste Material aus einem Schuss aus Glasfaser besteht.

12. Verfahren zum Herstellen eines Dachunterlagenschirms (100) nach einem der Ansprüche 1 des 6, **dadurch gekennzeichnet, dass** es Folgendes aufweist:
- einen Schritt des Zuführens einer ersten Schicht (102), die aus einem ersten metallischen oder metallisierten Material hergestellt ist, das eine Wärmerückstrahlbarriere bildet;
- einen Schritt des Zuführens einer zweiten Schicht (108), die aus einem zweiten gewebten Material hergestellt ist;
- einen Schritt des Klebens der zweiten Schicht (108) auf die erste Schicht (102);
- einen Schritt des Zuführens einer dritten Schicht (106), die aus einem isolierenden dritten Material hergestellt ist;
- einen Schritt des Klebens der dritten Schicht (106) auf die derart geklebte zweite Schicht (108);
- einen Schritt des Zuführens einer vierten Schicht (104), die aus einem vierten metallischen oder metallisierten Material, das eine Wärmerückstrahlbarriere bildet, hergestellt ist;
- einen Schritt des Klebens der vierten Schicht (104) auf die derart geklebte dritte Schicht (106);
- einen Schritt des Herstellens von Mikroperforierungen (110) in der ersten Schicht (102) und der zweiten Schicht (108), die die Durchlässigkeit für Wasserdampf und die Undurchlässigkeit für Wasser sicherstellen; und
- einen Schritt des Herstellens von Perforierungen (112) in der vierten Schicht (104), die die Durchlässigkeit für Wasserdampf sicherstellen.

13. Verfahren zum Herstellen eines Dachunterlagenschirms (100), nach einem der Ansprüche 7 oder 8, **dadurch gekennzeichnet, dass** es Folgendes aufweist:
- einen Schritt des Zuführens einer ersten Schicht (102), die aus einem ersten metallischen oder metallisierten Material, das eine Wärmerückstrahlbarriere bildet, hergestellt ist;
- einen Schritt des Zuführens einer zweiten Schicht (108), die aus einem zweiten gewebten Material hergestellt ist;
- einen Schritt des Klebens der zweiten Schicht (108) auf die erste Schicht (102);
- einen Schritt des Zuführens einer fünften Schicht (120), die aus einem fünften, atmungsfähigen Material hergestellt ist;
- einen Schritt des Klebens der fünften Schicht (120) auf die derart geklebte zweite Schicht (108);
- einen Schritt des Zuführens einer dritten Schicht (106), die aus einem isolierenden dritten Material hergestellt ist;
- einen Schritt des Klebens der dritten Schicht (106) auf die derart geklebte fünfte Schicht (120);
- einen Schritt des Zuführens einer vierten Schicht (104), die aus einem vierten metallischen oder metallisierten Material, das eine Wärmerückstrahlbarriere bildet, hergestellt ist;
- einen Schritt des Klebens der vierten Schicht (104) auf die derart geklebte dritte Schicht (106);
- einen Schritt des Herstellens von Mikroperforierungen (110) in der ersten Schicht (102) und der zweiten Schicht (108), die die Durchlässigkeit für Wasserdampf und die Undurchlässigkeit für Wasser sicherstellen; und
- einen Schritt des Herstellens von Perforierungen (112) in der vierten Schicht (104), die die Durchlässigkeit für Wasserdampf sicherstellen.
